# EUROPÄISCHE PATENTSCHRIFT

(11) **EP 2 181 029 B1**
(45) Veröffentlichungstag und Bekanntmachung des Hinweises auf die Patenterteilung: **21.09.2011**
(21) Anmeldenummer: 08786703.2
(22) Anmeldetag: 31.07.2008
(51) Int. Cl.: B60W 10/26, H02J 13/00, B60R 16/023

(54) **ÜBERWACHUNGSVORRICHTUNG ZUR ÜBERWACHUNG EINES ANSCHLUSSES EINER ANSCHLUSSKOMPONENTE**
MONITORING APPARATUS FOR MONITORING A CONNECTION OF A CONNECTION COMPONENT
DISPOSITIF DE CONTRÔLE DESTINÉ AU CONTRÔLE D'UNE CONNEXION D'UN COMPOSANT DE CONNEXION

(30) Priorität: 17.08.2007 DE 102007038990
(43) Veröffentlichungstag der Anmeldung: 05.05.2010
(73) Patentinhaber: Robert Bosch GmbH, 70442 Stuttgart (DE)
(72) Erfinder: BREMMER, Marcus, 71726 Benningen am Neckar (DE); WINTER, Arnold, 70794 Filderstadt (DE); MIKULEC, Dragan, 70372 Stuttgart (DE)
(86) Internationale Anmeldenummer: PCT/EP2008/060081
(87) Internationale Veröffentlichungsnummer: WO 2009/024444

(56) Entgegenhaltungen:
- EP-A- 0 752 592
- EP-A- 1 553 422
- DE-C1- 3 836 690

## Beschreibung

### Technisches Gebiet

Die vorliegende Erfindung betrifft die Überwachung einer Verbindung einer Anschlusskomponente, beispielsweise eines elektrischen Verbrauchers oder eines Gehäuses, mit einem Energieversorgungsnetz insbesondere in einem Fahrzeug.

### Stand der Technik

In modernen Fahrzeugen, beispielsweise in Hybridfahrzeugen oder in Brennstoffzellenfahrzeugen, wird neben einem 14-V-Bordnetz auch ein Niederspannungsnetz zur Versorgung der in dem Fahrzeug angeordneten Verbraucher verbaut. Die in einem solchen Niederspannungsnetz auftretenden Spannungen betragen etwa 200V bis 1000V und sind daher so hoch, dass bei Berührung der aktiven und unter Niederspannung stehenden Teile gefährliche Körperströme fließen können. Für ein derartiges Niederspannungsnetz müssen daher Schutzmaßnahmen gegen die direkte und die indirekte Berührung aktiver unter Niederspannung stehender Teile ergriffen werden, wie sie beispielsweise in der Norm DIN VDE 0100 beschrieben sind.

Eine der Schutzmaßnahmen besteht darin, dass bei Zuschaltung des Niederspannungsnetzes alle Steckverbindungen gesteckt und evtl. verriegelt sowie dass alle Gehäusedeckel fehlerfrei angebracht sind. Hierzu werden die Steckverbindungen mit zwei zusätzlichen Kontakten versehen und seriell niederohmig mit evtl. vorhandenen Gehäusedeckelkontakten mittels einer Überwachungsleitung verschaltet und überwacht. Diese Überwachungsleitung wird oft als Pilotlinie, Pilotleitung oder Interlog-Leitung bezeichnet.

Sind alle Stecker, die mit der Pilotleitung überwacht werden, fehlerfrei gesteckt, so erkennt dies eine zentrale Überwachungseinheit und gibt das Niederspannungsnetz zur Zuschaltung frei. Zusätzlich werden Gehäusedeckel auf das Vorhandensein und auf die richtige Montage überwacht, so dass keine Niederspannung-führenden Teile im Inneren der Gehäuse berührt werden können.

Ein Nachteil an der Pilotleitungsüberwachung ist, dass nur eine Unterbrechung der Pilotleitung und nicht gleichzeitig der Ort der Unterbrechung erkannt wird. So kann beispielsweise ein zentrales Überwachungssystem zwar erkennen, dass eine Unterbrechung der Pilotlinie und damit ein Fehler vorliegen. Der Fehlerort kann jedoch nicht genau bestimmt werden, was bei komplexen Systemen zu aufwendigen und teuren Fehlersuchen führen kann. Sind ferner weitere Maßnahmen in einer der Niederspannungskomponenten aufgrund des erkannten Fehlers notwendig, so muss dies durch das zentrale Überwachungssystem gemeldet werden. Dadurch entsteht systembedingt ein zeitlicher Verzug, der gegebenenfalls in bestimmten Situationen kritisch für die Systemsicherheit sein kann.

Aus der DE 38 36 690 ist eine elektronische Schaltung bekannt zur betriebssicheren Abfrage eines Sensors. Die Vorrichtung erlaubt gleichzeitig auch die Überprüfung der Signalleitung zwischen dem Sensor und einem sein Signal auswertenden Steuergerät.

Die Aufgabe der Erfindung ist, ein Konzept zur Überwachung von elektrischen Verbindungen zu schaffen, das eine sichere Fehlererkennung und eine Fehlerortung ermöglicht.

Diese Aufgabe wird durch die Merkmale der unabhängigen Patentansprüche gelöst. Vorteilhafte Weiterbildungsformen sind in den abhängigen Patentansprüchen angegeben.

Offenbarung der Erfindung

Die Erfindung betrifft ein Überwachungssystem zum Überwachen eines Anschlusses von zumindest einer Anschlusskomponente an ein Energieversorgungsnetz, wobei die Anschlusskomponente an das Energieversorgungsnetz und über ein elektrisches Verbindungselement an ein Überwachungssystem anschließbar ist. Das Überwachungssystem umfasst bevorzugt eine Überwachungseinrichtung und eine Stromerzeugungseinrichtung, insbesondere einer Stromquelle, zum Einspeisen eines Stromes einer vorbestimmten Amplitude in den ersten Anschluss des Verbindungselementes, um einen Spannungsabfall zwischen dem ersten Anschluss und dem zweiten Anschluss zu erzeugen.

Darüberhinaus umfasst das Überwachungssystem ein weiteres Verbindungselement mit dem das Verbindungselement der Anschlusskomponente verbindbar ist wobei das weitere Verbindungselement eine niederohmige Verbindung oder ein Widerstandselement zwischen einem ersten Anschluss des weiteren Verbindungselementes und einem zweiten Anschluss des weiteren Verbindungselementes aufweist, wobei die Anschlüsse des weiteren Verbindungselementes mit den Anschlüssen des Verbindungselementes verbindbar sind.

Das Überwachungssystem umfasst eine Überwachungsvorrichtung zur Überwachung eines Anschlusses einer Anschlusskomponente an ein Energieversorgungsnetz, wobei die Anschlusskomponente an das Energieversorgungsnetz und über ein elektrisches Verbindungselement an ein Überwachungssystem anschließbar ist.

Bevorzugt umfasst die Überwachungsvorrichtung eine Spannungsmesseinrichtung zum Erfassen eines Spannungswertes einer Spannung zwischen einem ersten Anschluss und einem zweiten Anschluss des elektrischen Verbindungselementes, wobei der erste Anschluss und der zweite Anschluss mit dem Überwachungssystem verbindbar sind, und eine Auswerteeinrichtung zum Auswerten des Spannungswertes, wobei die Auswerteeinrichtung ausgebildet ist, ein Hinweissignal zu erzeugen, das auf einen fehlerhaften Anschluss an das Energieversorgungsnetz hinweist, falls der Spannungswert sich von einem vorbestimmten Spannungswert unterscheidet.

Gemäß einer Ausführungsform ist zwischen den ersten Anschluss und den zweiten Anschluss ein Widerstandselement schaltbar.

Gemäß einer weiteren Ausführungsform ist die Auswerteeinrichtung ausgebildet, das Hinweissignal zu erzeugen, falls der Spannungswert sich von dem vorbestimmten Spannungswert unterscheidet.

Gemäß einer weiteren Ausführungsform liegt der vorbestimmte Spannungswert zwischen 0 Volt und 1 Volt. Bevorzugt ist der vorbestimmte Spannungswert gleich 0 Volt.

Gemäß einer weiteren Ausführungsform ist die Überwachungsvorrichtung in dem Verbindungselement angeordnet.

Die Erfindung betrifft ferner eine Anschlusskomponente, insbesondere eine Fahrzeugbatterie oder eine Fahrzeugzündspule oder eine Fahrzeugsteuereinheit oder eine Niedervoltfahrzeugbatterieanlage oder ein Komponentengehäuse oder ein Komponentengehäusedeckel, mit der erfindungsgemäßen Überwachungsvorrichtung, die beispielsweise in der Anschlusskomponente integriert sein kann.

Gemäß einer weiteren Ausführungsform umfasst das Überwachungssystem ferner eine zentrale Auswerteeinrichtung, die mit der Auswerteeinrichtung der erfindungsgemäßen Überwachungsvorrichtung verbindbar ist, um das Hinweissignal zu empfangen und um bei Vorliegen eines Verbindungsfehlers ein Fehlersignal auszugeben, das auf die Anschlusskomponente hinweist.

Die Erfindung betrifft ferner ein Fahrzeugenergiesystem mit der erfindungsgemäßen Überwachungsvorrichtung und dem erfindungsgemäßen Überwachungssystem.

Beschreibung der Ausführungsformen

Weitere Ausführungsbeispiele werden Bezug nehmend auf die beiliegenden Zeichnungen erläutert. Es zeigen:
Fig. 1 ein Überwachungssystem mit daran angeschlossenen Überwachungsvorrichtungen gemäß einer Ausführungsform der Erfindung;
Fig. 2 ein Überwachungssystem mit daran angeschlossenen Überwachungsvorrichtungen gemäß einer weiteren Ausführungsform der Erfindung;
Fig. 3 ein Überwachungssystem mit daran angeschlossenen Überwachungsvorrichtungen gemäß einer weiteren Ausführungsform der Erfindung;
Fig. 4 ein Überwachungssystem mit daran angeschlossenen Überwachungsvorrichtungen gemäß einer weiteren Ausführungsform der Erfindung;
Fig. 5 ein Überwachungssystem mit daran angeschlossener Überwachungsvorrichtung gemäß einer weiteren Ausführungsform der Erfindung;
Fig. 6a, 6b ein Überwachungssystem mit daran angeschlossener Überwachungsvorrichtung gemäß weiteren Ausführungsformen der Erfindung;
Fig. 7a bis 7c elektrische Verbindungen; und
Fig. 8a bis 8c elektrische Verbindungen.

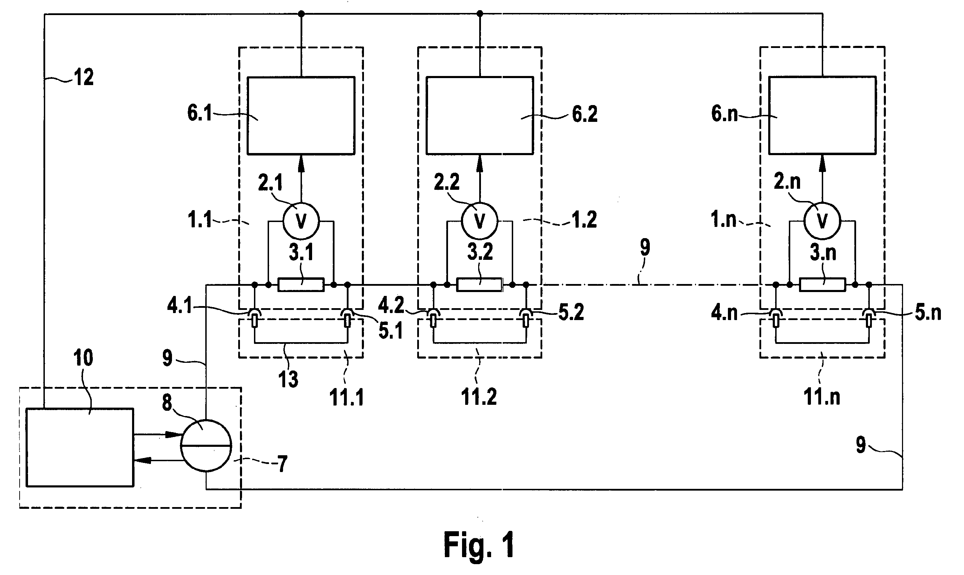

Fig. 1 zeigt beispielhaft eine Mehrzahl von Überwachungsvorrichtungen 1.1, 1.2, 1.n, die jeweils eine Spannungsmesseinrichtung 2.1, 2.2, 2.n, ein parallel zu der Spannungsmesseinrichtung 2.1, 2.2, 2.n geschaltetes Widerstandselement 3.1, 3.2, 3.n sowie jeweils ein Verbindungselement mit jeweils einem ersten Anschluss 4.1, 4.2, 4.n und einem zweiten Anschluss 5.1, 5.2, 5.n aufweisen. Das Widerstandselement 3.1, 3.2, 3.n ist jeweils zwischen dem ersten Anschluss 4.1, 4.2, 4.n und dem zweiten Anschluss 5.1, 5.2, 5.n angeordnet. Ein Ausgang der jeweiligen Spannungsmesseinrichtung 2.1, 2.2, 2.n ist jeweils mit einem Eingang einer Auswerteeinheit 6.1, 6.2, 6.n verbunden.

Die Überwachungsvorrichtungen 1.1 bis 1.n sind an ein Überwachungssystem angeschlossen, das eine Stromquelleneinheit 7 mit einer Stromquelle 8 und eine Pilotleitung 9 umfassen kann. Ferner umfasst die Stromquelleneinheit 7 eine Steuer- und Auswerteeinheit 10 vorgesehen, die mit der Stromquelle 8 gekoppelt ist.

Jedem Verbindungselement der jeweiligen Überwachungsvorrichtung 1.1 bis 1.n ist jeweils ein weiteres Verbindungselement 11.1 bis 11.n des Überwachungssystems zugeordnet, über das die jeweilige Überwachungsvorrichtung 1.1 bis 1.n an die Pilotleitung 9 und somit an die Stromquelle 8 anschließbar ist.

Das Überwachungssystem umfasst ferner eine Verbindungsleitung 12, beilspielsweise eine Busleitung, mit der jeweils ein Ausgang der jeweiligen Auswerteeinheit 6 der jeweiligen Überwachungsvorrichtung 1.1 bis 1.n angeschlossen ist. Die Verbindungsleitung 12 verbindet jeweils die Auswerteeinheit 6.1, 6.2 bis 6.n mit der zentralen Steuer- und Auswerteeinheit 10.

Im Folgenden wird exemplarisch auf die Überwachungsvorrichtung 1.1 Bezug genommen:
Wie in Fig. 1 dargestellt ist das jeweilige weitere Verbindungselement 11.1 des Überwachungssystems mit zwei Steckkontakten 4.1, 5.1, versehen, die leitend verbunden sind und die bei Verbindung die hierzu korrespondierenden Steckkontakte des Verbindungselementes der Überwachungsvorrichtung 1.1 eingreifen.
Wie in Fig. 1 dargestellt, sind der erste Anschluss 4.1 und der zweite Anschluss 5.1 des Verbindungselementes der Überwachungsvorrichtung 1.1 bei fehlerfreier Steckverbindung über das weitere Verbindungselement 11.1 kurzgeschlossen.
Sind die Verbindungen fehlerfrei, so fällt beispielsweise über dem Widerstand 3.1 der Überwachungsvorrichtung 1.1 keine Spannung ab, so dass die Auswerteeinheit 6.1 der Steuer- und Auswerteeinheit 10 optional eine fehlerfreie Verbindung mitteilen kann. Bei einer fehlerhaften Verbindung hingegen werden die Anschlüsse 4.1 und 5.1 des Verbindungselementes der Überwachungsvorrichtung 1.1 nicht mehr überbrückt, so dass der Widerstand 3.1 nicht mehr überbrückt ist, so dass an diesem prinzipiell eine Spannung abfallen kann. Die Stromquelle kann hierzu über weitere und in Fig. 1 nicht dargestellte Anschlüsse mit dem Widerstandselement 3.1 verbunden sein und durch dieses einen Strom treiben, der bei fehlerhafter Verbindung einen Spannungsabfall an dem Widerstandselement 3.1 erzeugt.

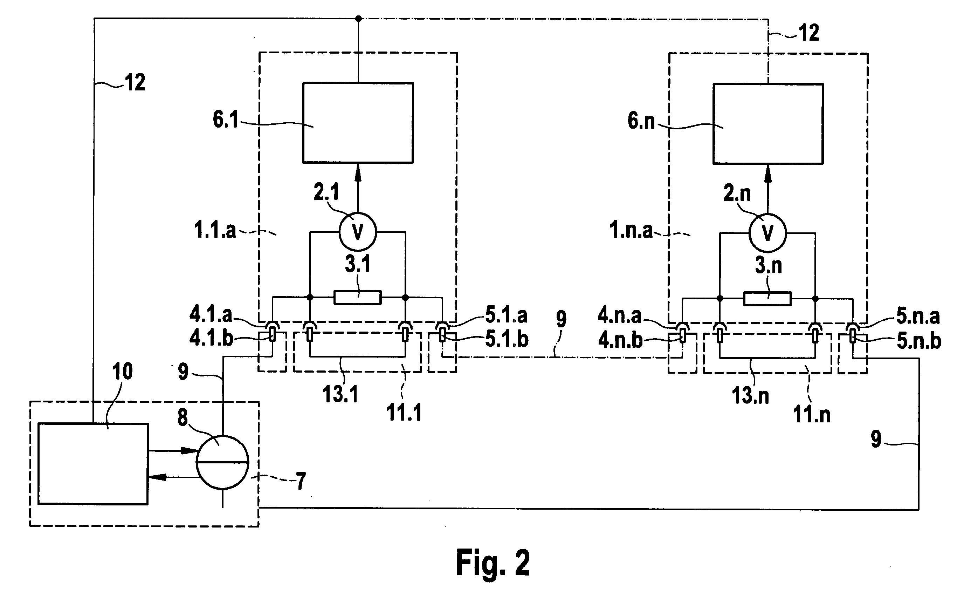

Fig. 2 zeigt eine Mehrzahl von Überwachungsvorrichtungen 1.1.a, 1.n.a, die jeweils eine Spannungsmesseinheit 2.1, 2.n, ein Widerstandselement 3.1, 3.n sowie eine Auswerteeinrichtung 6.1, 6.n aufweisen und wie in Fig. 1 dargestellt verschaltet sind. Im Unterschied zu dem in Fig. 1 dargestellten Ausführungsbeispiel umfassen die weiteren Verbindungselemente des Überwachungssystems jeweils ein Anschlusspaar mit einem ersten Anschluss 4.1.b, 4.n.b und einem zweiten Anschluss 5.1.b, 5.n.b, die zum Verbinden der jeweiligen Überwachungsvorrichtung 1.1.a, 1.n.a an die Pilotleitung 9 über jeweils einen ersten Anschluss 4.1.a, 4.n.a und einen zweiten Anschluss 5.1.a, 5.n.a vorgesehen sind. Darüber hinaus umfassen die den Überwachungsvorrichtungen 1.1.a, 1.n.a zugeordneten weiteren Verbindungselemente des Überwachungssystems weitere Anschlüsse 11.1, 11.n, die mittels einer Kurzschlussbrücke 13.1, 13.n niederohmig verbunden sind.

Im Folgenden wird exemplarisch auf die Überwachungsvorrichtung 1.1 Bezug genommen:
Die Überwachungsvorrichtung 1.1.a umfasst ein Verbindungselement, das zum Verbinden mit dem weiteren Verbindungselement des Überwachungssystems vorgesehen ist. Das Verbindungselement umfasst den ersten Anschluss 4.1.a, der mit dem ersten Anschluss 4.1.b des weiteren Verbindungselementes verbindbar ist, und den zweiten Anschluss 5.1.a, der mit dem zweiten Anschluss 5.1.b des weiteren Verbindungselementes verbindbar ist. Beispielswiese ist das Widerstandselement 3.1 zwischen dem ersten Anschluss 4.1.a und zweiten Anschluss 5.1.a angeordnet. Darüber hinaus umfasst das Verbindungselement der Überwachungsvorrichtung 1.1.a ein weiteres Anschlusspaar, das mit den mittels der Brücke 13.1 überbrückten Anschlüssen des weiteren Verbindungselementes des Überwachungssystems verbindbar ist.

So wird bei fehlerfreier Verbindung des Verbindungselementes der Überwachungsvorrichtung 1.1.a mit dem weiteren Verbindungselement des Überwachungssystems eine Überbrückung des Widerstandselementes 3.1 realisiert, so dass der durch die Stromquelle 8 in den ersten Anschluss 4.1.b des weiteren Verbindungselementes über die Brücke und nicht durch das Widerstandselement 3.1 fließt, so dass an diesem keine detektierbare Spannung abfällt. In diesem Falle stellt die Auswerteeinheit 6.1 fest, dass die Verbindung zum Überwachungssystem und somit die Verbindung zum Energienetz fehlerfrei ist.

Die Anschlüsse 4.1.b, 5.1.b können beispielsweise auf der Kleinspannungsseite mit z.B. 14 V Bordnetzspannung angeordnet sein. Die weiteren Anschlusspaare, die durch die Brücke 13.1 verbunden sind, können hingegen auf der Niederspannungsseite angeordnet sein. Das weitere Verbindungselement kann somit mehrstückig ausgebildet sein, so dass beispielsweise bei einer fehlerhaften Verbindung zwischen der Überwachungsvorrichtung 1.1.a mit dem Energieversorgungsnetz das Widerstandselement 3.1 nicht mehr überbrückt wird, so dass bei fehlerfreier Anbindung an das Überwachungssystem ein hierdurch fließender Strom zum Spannungsabfall beitragen kann.

Bei einer fehlerhaften Verbindung zwischen der Überwachungsvorrichtung 1.1.a, 1.n.a und dem Überwachungssystem bildet sich aufgrund der Serienschaltung der Überwachungsvorrichtungen kein Stromfluss aus. Die Stromquelle 8 kann in diesem Falle erfassen, dass kein Strom fließt und ein Hinweissignal erzeugen, das auf eine fehlerhafte Verbindung der jeweiligen Überwachungsvorrichtung 1.1.a, 1.n.a mit dem Überwachungssystem hinweist. Da die Stromquelle 8 mit der Steuer- und Auswerteeinheit 10 gekoppelt ist, empfängt die Steuer- und Auswerteeinheit 10 das Hinweissignal, so dass auch eine Fehlererkennung im Falle einer fehlerhaften Verbindung mit dem Überwachungssystem möglich ist.

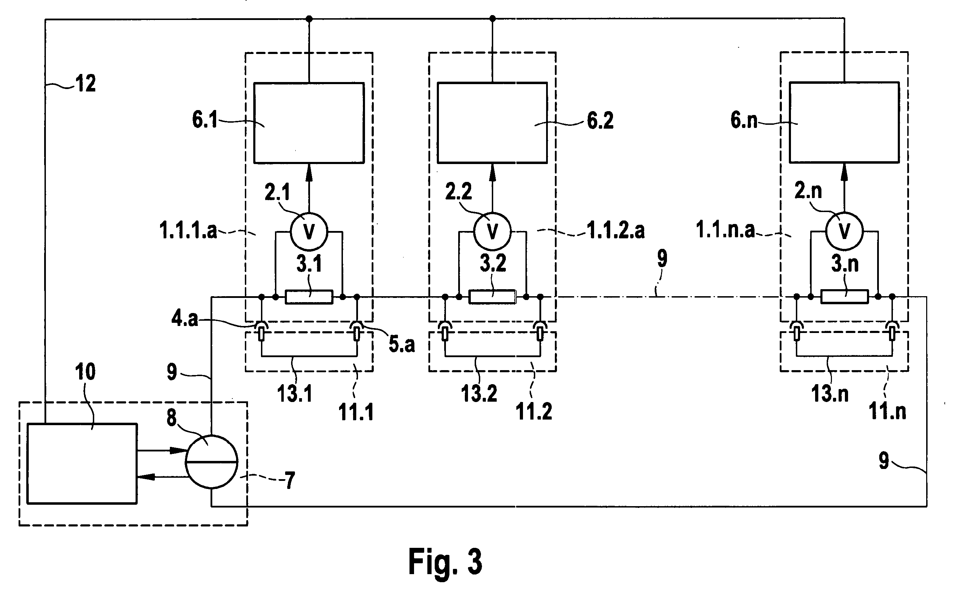

Fig. 3 zeigt eine Anordnung einer Mehrzahl von Überwachungsvorrichtungen 1.1.1.a bis 1.1.n.a, die jeweils eine Spannungsmesseinrichtung 2.1, 2.2, 2.n, eine Auswerteeinheit 6.1, 6.2, 6.n und ein Widerstandselement 3.1, 3.2, 3.n aufweisen. Im Unterschied zu dem in Fig. 2 dargestellten Ausführungsbeispiel ist die Stromquelle 8 dauerhaft mit jeweils einem ersten Anschluss eines Verbindungselementes der jeweiligen Überwachungsvorrichtung 1.1.1.a, 1.1.n.a verbunden, wobei die Überwachungsvorrichtungen 1.1.1.a, 1.1.n.a in Serie geschaltet sind und gemeinsam mit der Pilotleitung 9 eine an die Stromquelle 8 angeschlossene Serienschaltung bilden.

Die weiteren Anschlüsse mit den Brücken 13.1, 13.n sind beispielsweise der Niederspannungsseite zugeordnet und überbrücken bei fehlerfreier Verbindung zum Niederspannungsnetz die Widerstandselemente 3.1, 3.n, so dass an diesen keine detektierbare Spannung abfällt. Bei fehlerhafter Verbindung einer der Überwachungsvorrichtungen 1.1.1.a, 1.1.n.a mit dem Energienetz über beispielsweise die Anschlüsse 4.a und 5.a wird das jeweilige Widerstandselement 3.1, 3.n nicht mehr überbrückt, so dass sich durch dieses ein Stromfluss ausbilden kann, der zum Spannungsabfall beiträgt, den die jeweilige Auswerteeinheit 6.1, 6.2, 6.n detektieren und ansprechend hierauf ein Hinweissignal erzeugen kann, das der Steuer- und Auswerteeinheit 10 über die Busverbindung 12 zugeleitet wird.

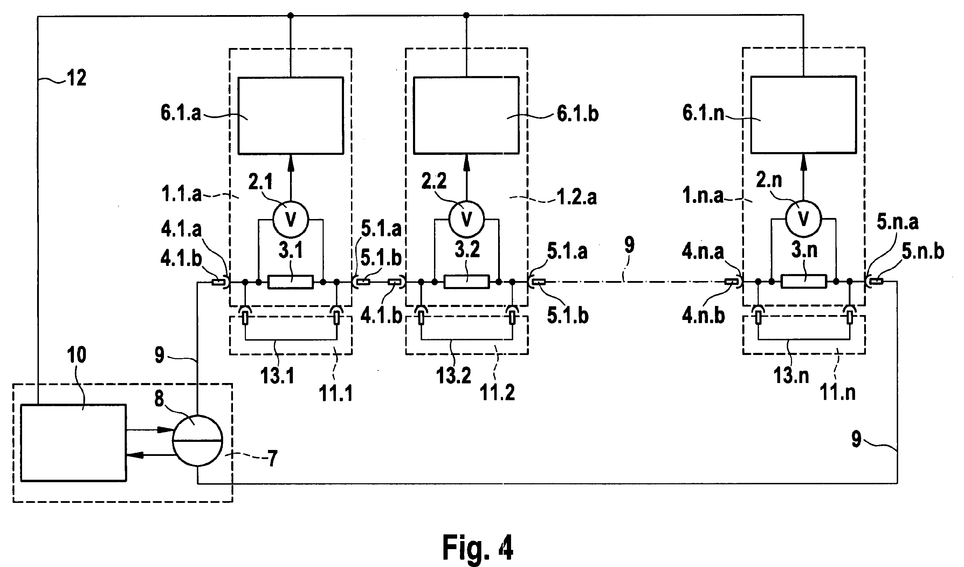

Fig. 4 zeigt eine Anordnung einer Mehrzahl von Überwachungsvorrichtungen 1.1.a, 1.2.a, 1.n.a mit Auswerteeinheiten 6.1.a, 6.1.b, 6.1.n, die im Unterschied zu dem in Fig. 3 dargestellten Ausführungsbeispiel und in Abwandlung des in Fig. 2 dargestellten Ausführungsbeispiels über von der Niederspannungsseite getrennte Verbindungselemente an das Überwachungssystem anschließbar ist. So ist beispielsweise die in Fig. 4 dargestellte Überwachungsvorrichtung 1.1.a über die Anschlüsse 4.1.a, 5.1.a des Verbindungselements mit den korrespondierenden Anschlüssen 4.1.b, 5.1.b des Überwachungssystems an dasselbe angeschlossen.

Die Anschlüsse 4.1.b, 5.1.b sind jedoch nicht innerhalb des weiteren Verbindungselementes des Überwachungssystems angeordnet, sondern sind extern ausgeführt.

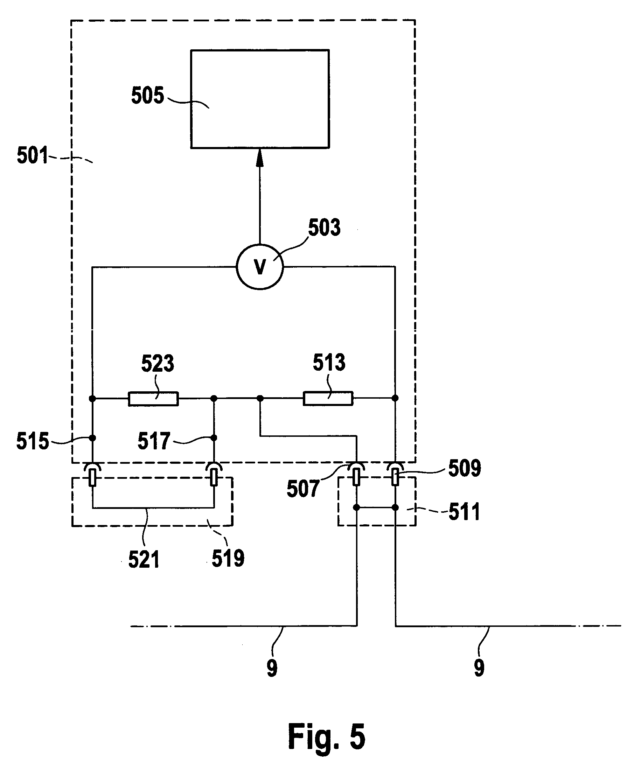

Fig. 5 zeigt eine Überwachungsvorrichtung 501 mit einer Spannungsmesseinrichtung 503, deren Ausgang mit einem Eingang einer Auswerteeinheit 505 verbunden ist. Die Überwachungsvorrichtung ist über einen ersten Anschluss 507 und einen zweiten Anschluss 509 mit der Pilotleitung 9 verbunden, wobei die Anschlüsse 507 und 509 niederohmig verbunden und optional kurzgeschlossen sind. Die Anschlüsse 507 und 509 sind ferner einem Verbindungselement der Überwachungsvorrichtung 501 zugeordnet und mit einem weiteren Verbindungselement 511 des Überwachungssystems verbindbar, das die vorstehend erwähnte Kurzschlussbrücke aufweist. Zwischen dem ersten Anschluss 507 und dem zweiten Anschluss 509 ist ein Widerstandselement 513 angeordnet.

Die Überwachungsvorrichtung 501 umfasst ferner weitere Anschlüsse 515 und 517, die mittels eines weiteren Verbindungselementes 519 des Überwachungssystems mit der Pilotlinie 9, das eine Kurzschlussbrücke 521 umfasst, miteinander verbindbar sind. Das weitere Verbindungselement 519 ist bevorzugt der Niederspannungsseite zugeordnet. Zwischen den Anschlüssen 515 und 517 ist ein weiteres Widerstandselement 523 angeordnet.

Die Spannungsmesseinrichtung 503 ist vorgesehen, eine Spannung zwischen den Anschlüssen 515 und 509 zu messen. Bei fehlerfreier Verbindung der Überwachungsvorrichtung 501 mit dem Energienetz überbrückt die Brücke 521 das Widerstandselement 523, so dass an diesem keine Spannung abfällt. Bei fehlerfreier Verbindung mit dem Überwachungssystem ist auch das Widerstandselement 513 kurzgeschlossen, so dass die Spannungsmesseinrichtung keine detektierbare Spannung misst.

Die Kurzschlussverbindung in dem weiteren Verbindungselement 511 ist jedoch optional, sodass bei deren Wegfall in den ersten Anschluss 507 ein Strom eingespeist werden kann, der zu einem durch die Spannungsmesseinrichtung 503 detektierbaren Spannungsabfall führt, der bei fehlerfreier Verbindung beispielsweise eine vorbestimmte Amplitude, z.B. 1V oder 2V, aufweisen kann.

Ist die Verbindung zum Energienetz fehlerhaft und entfällt die in dem weiteren Verbindungselement 511 angeordnete Brücke, so wird das Widerstandselement 523 nicht mehr kurzgeschlossen, so dass der in den ersten Anschluss 507 eingespeiste Strom zu einem zweiten Spannungsabfall führt, der eine weitere Spannungsamplitude aufweist, die durch die Spannungsmesseinrichtung 503 detektierbar ist. Unterscheidet sich die weitere Spannungsamplitude von einem vorbestimmten Schwellwert, beispielsweise von der Spannungsamplitude, die bei fehlerfreier Verbindung der Überwachungsvorrichtung 501 zum Energienetz und bei Wegfall der Kurzschlussverbindung an dem Widerstandselement 513 abfällt, so wird dieser Unterschied von der Auswerteeinheit 505 erfasst, sodass die fehlerhafte Verbindung lokalisiert werden kann.

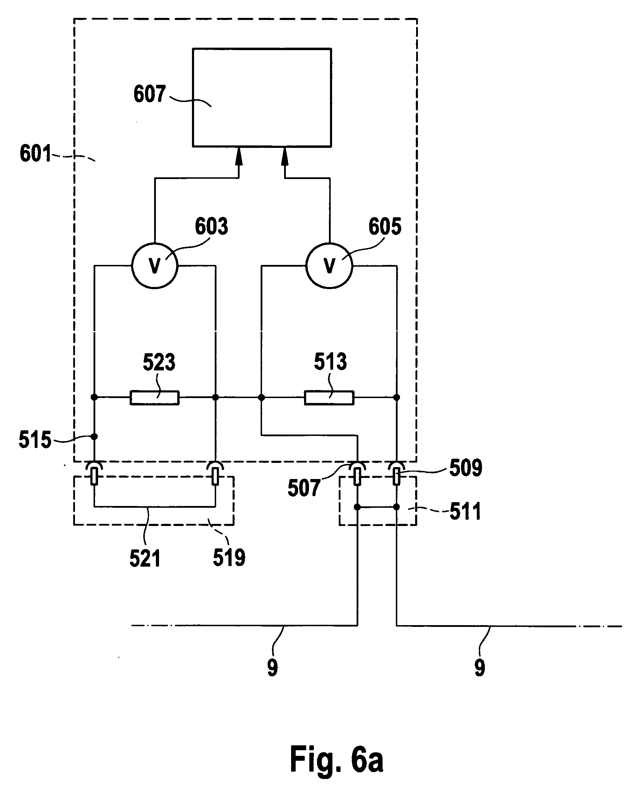

In Fig. 6a ist eine Überwachungsvorrichtung 601 dargestellt, die im Unterschied zu dem in Fig. 5 dargestellten Ausführungsbeispiel eine erste Spannungsmesseinrichtung 603 und eine zweite Spannungsmesseinrichtung 605 aufweist. Die erste Spannungsmesseinrichtung 603 misst eine über dem Widerstandselement 523 abfallende Spannung. Die zweite Spannungsmesseinrichtung 605 misst hingegen eine an dem Widerstandselement 513 abfallende Spannung. Ein Ausgang der ersten Spannungsmesseinrichtung 603 und ein Ausgang der zweiten Spannungsmesseinrichtung 605 sind mit einer Auswerteeinheit 607 verbunden. Die in dem weiteren Verbindungselement 511 eingezeichnete Verbindungsbrücke ist ebenfalls optional. Die Auswerteeinheit 607 erfasst auf der Basis der gemessenen Spannungen über den Widerstandselementen 523 und 513, ob die Überwachungsvorrichtung fehlerfrei mit dem Energienetz bzw. mit dem Überwachungssystem verbunden ist.

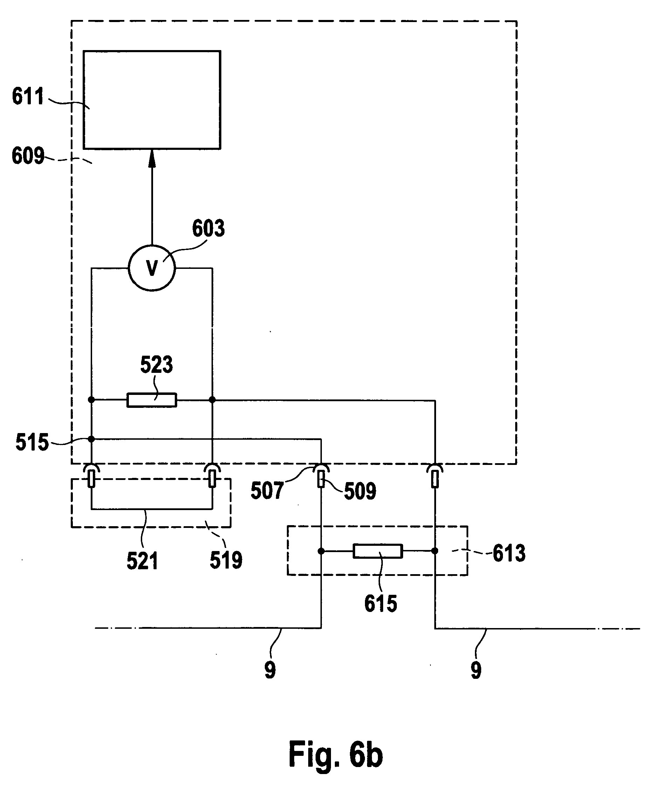

Fig. 6b zeigt im Unterschied zu dem in Fig. 6a dargestellten Ausführungsbeispiel eine Überwachungsvorrichtung 609 mit nur einer Auswerteeinheit 611, die zur Auswertung der Spannung über dem Widerstand 523 vorgesehen ist. Ferner befindet sich ein Kontaktstecker 613 mit einem zwischen die Anschlüsse 507 und 509 schaltbarem Widerstandselement 615.

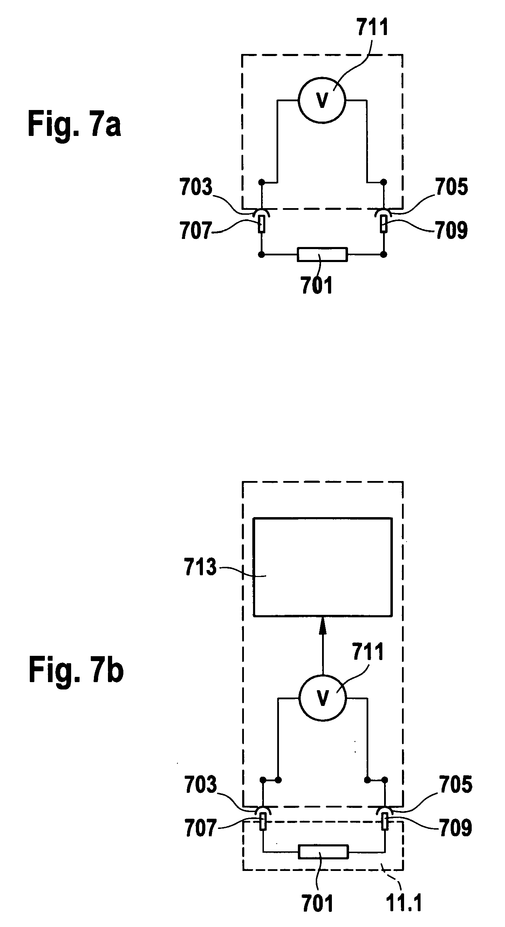

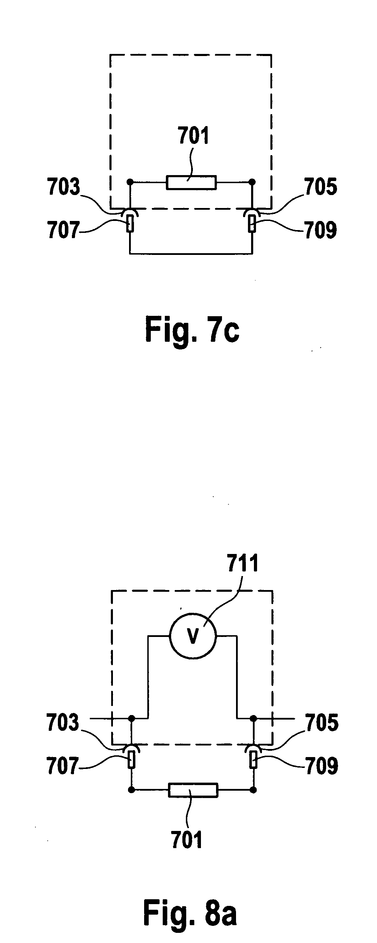

Fig. 7a zeigt an einem Ausführungsbeispiel eine Verbindung einer Überwachungsvorrichtung mit dem Überwachungssystem, das ein Widerstandselement 701 aufweist. Ein erster Anschluss 703 und ein zweiter Anschluss 705 eines Verbindungselementes der Überwachungsvorrichtung sind mit einem ersten Anschluss 707 und einem zweiten Anschluss 709 eines weiteren Verbindungselementes des Überwachungssystems verbunden. Das Widerstandselement 701 ist bevorzugt in dem weiteren Verbindungselement zwischen den Anschlüssen 707 und 709 angeordnet. Bei fehlerfreier Verbindung wird beispielsweise durch eine in Fig. 7 nicht dargestellte Stromquelle ein Strom durch den Widerstand 701 erzeugt, der zu einem Spannungsabfall führt, der durch die Spannungsmesseinrichtung 711 detektierbar ist. Die Spannungsmesseinrichtung 711 leitet ein Spannungsmesssignal an eine in Fig. 7b dargestellte Auswerteeinheit 713, die auf dessen Basis eine Fehlerdiagnose durchführen kann.

In Fig. 7b ist eine aiternative Verbindung mit dem Überwachungssystem und dessen Pilotleitung dargestellt, bei der die Anschlüsse 707 und 709 kurzgeschlossen sind und bei der das Widerstandselement 701 zwischen den Anschlüssen 703 und 705 angeordnet ist.

Wie in Fig. 7c dargestellt können die Spannungsmesseinrichtung und die Auswerteeinheit entfallen, sodass nur die vorstehend beschriebene zentrale Stromquelleneinheit 8 den Fehler erkennen kann. Eine Lokalisierung des Fehlerortes ist dann nur möglich, wenn die Impedanzen 701 in den zu überwachenden Komponenten derart codiert sind, dass eine eindeutige Lokalisierung möglich ist.

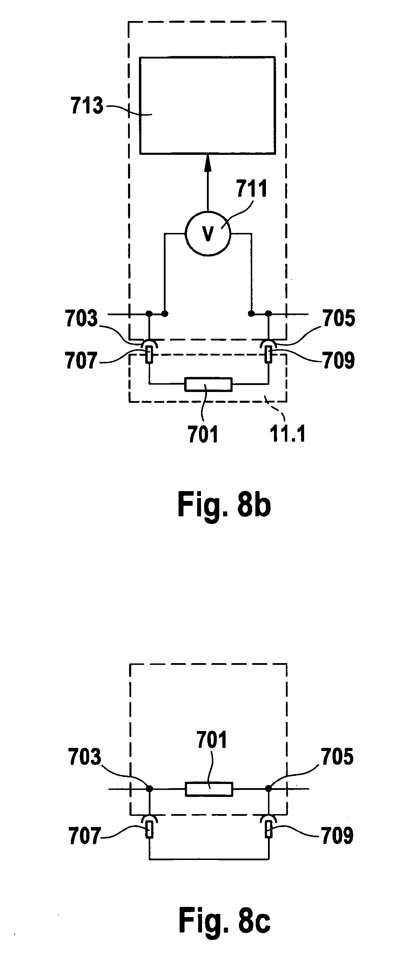

Wie in den Figuren 8a, 8b und 8c dargestellt, kann die Anbindung an die Pilotleitung des Überwachungssystems dadurch erfolgen, dass die Spannungsmesseinrichtung 711 wie in den Figuren 8a und 8b dargestellt in Serie mit der Pilotleitung schaltbar ist. Wie in Fig. 8c dargestellt, kann die Anbindung an die Pilotleitung auch über das der Überwachungsvorrichtung zugeordnete Widerstandselement 701 erfolgen.

Wie vorstehend ausgeführt werden zum Aufbau einer Pilotlinie die zu überwachenden Komponenten und deren Verbindungen, beispielsweise Steckverbinder oder Gehäusedeckelüberwachungen, mit einer separaten Leitung, die der Pilotleitung 9 entsprechen kann, verbunden. Die Pilotleitung 9 wird, wie in Fig. 2 dargestellt, bevorzugt in die zu überwachenden Komponenten mithilfe der Steckkontakte 4.1.a, 4.n.b und 5.1.a, 5.n.a, geführt. Diese Steckkontakte können auch wahlweise pro Komponente als ein einziger Steckkontakt ausgeführt oder in einem bereits vorhandenen Signalstecker integriert sein.

Über eine weitere Steckverbindung, beispielsweise über die in Fig. 2 dargestellte Steckverbindung 11.1, 11.n, können die in den zu überwachenden Komponenten angeordneten Impedanzen 3.1, 3.n niederohmig überbrückt werden, was durch die Leitungen 13.1, 13.n realisiert werden kann. Die Impedanzen 3.1, 3.n sind zweckmäßigerweise etwa gleich groß, können sich jedoch unterscheiden. Parallel zu den Impedanzen 3.1, 3.n wird, wie in Fig. 2 dargestellt, jeweils eine Spannungsmessvorrichtung 2.1, 2.n angeschlossen, die ihr Spannungssignal an die jeweilige Auswerteeinheit 6.1, 6.n liefert. Bevorzugt ist die Stromquelle 8 in der Pilotleitung 9 integriert, und regelt über die Steuer- und Auswerteeinheit 10 den Strom in der Pilotleitung 9 unabhängig von der Anzahl der zu überwachenden Anschlusskomponenten oder der Überwachungsvorrichtungen in der Pilotleitung auf einen konstanten Wert.

Wird an einer der zu überwachenden Komponenten 1.1.a, 1.n.a der Steckkontakt 11.1, 11.n getrennt bzw. ein Deckel geöffnet, so fällt an der jeweiligen Impedanz 3.1, 3.n eine Spannung ab, die größer ist als ein definierter Schwellwert. Diese Spannung wird über die jeweilige Spannungsmessvorrichtung 2.1, 2.n gemessen und in der Auswerteeinheit 6.1, 6.n verarbeitet. Sind die Steckverbindungen bzw. die Gehäusedeckel geschlossen und sind die Steckkontakte der Pilotlinie gesteckt, so misst die Spannungsmessvorrichtung 2.1, 2.n eine Spannung von ungefähr 0 V. Damit der Strom im Falle eines getrennten Steckkontaktes bzw. eines geöffneten Deckels konstant bleibt, kann die Stromquelle 8 eine höhere Spannung einstellen, was durch die zentrale Auswerteeinheit 10 erkannt wird, wodurch erkennbar ist, dass ein Steckkontakt getrennt bzw. ein Gehäusedeckel geöffnet ist. Ein getrennter Steckkontakt bzw. ein geöffneter Deckel kann zusätzlich von der zu überwachenden Komponente dezentral erkannt werden. Die zu überwachende Komponente kann gegebenenfalls selbst Maßnahmen einleiten, wie es in den Figuren 1 bis 4 dargestellt ist. Hierzu können die zu überwachenden Anschlusskomponenten beispielsweise über die Signal- oder Busverbindung 12 den Überwachungszustand gegenseitig austauschen und gegebenenfalls eine Plausibilisierung des Überwachungszustandes vornehmen und/oder getroffene Maßnahmen den anderen zu überwachenden Komponenten mitteilen und/oder eine Diagnoseinformation zum Auffinden des Fehlerortes senden.

Wahlweise können die Steckkontakte der Pilotleitung 4.1.b, 4.n.b und 5.1.b, 5.n.b in der gleichen Weise wie in Fig. 5 dargestellt mit einer parallel geschalteten Impedanz 513 in dem Stecker 511 überwacht werden, wie die Steckverbinder der Niedervoltsteckkontakte bzw. Gehäusedeckelüberwachungen 519.

Sind mehrere zu überwachende Kontakte in einer Komponente enthalten, können diese innerhalb der Komponente seriell verschaltet werden. In diesem Fall können zur dezentralen Diagnose wahlweise jeder zu überwachende Kontakt mit einer Spannungsmessung oder mehrere Kontakte mit einer einzigen Spannungsmessung versehen werden.

Wahlweise kann in dem jeweiligen Steckkontakt, beispielsweise in dem Steckkontakt 11.1 aus Fig. 2, auch die Referenzimpedanz 701 aus Fig. 7 integriert sein. So kann jedoch nur ein einziger Fehler erkannt werden.

Darüber hinaus kann die in Fig. 2 dargestellte Stromquelleneinheit 7 in eine der zu überwachenden Komponenten 1.1 a, 1.1 n integriert werden.

Weiterhin kann, wie in Fig. 5 dargestellt, ein separater Pilotkontaktstecker 511 bzw. 4.1, 4.n und 5.1, 5.n aus Fig. 2 entfallen, falls dieser Stecker in eine bereits vorhandene Signalsteckverbindung der Überwachungskomponente 1.1.a, 1.n.a aus Fig. 2 integriert werden kann.

Die Auswerteeinrichtungen können beispielsweise über ein Fahrzeugkleinspannungsnetz mit beispielsweise 14 Volt Betriebsspannung versorgt werden. Sie umfassen ferner eine Sendeeinrichtung zum Aussenden von Signalen, die jeweils einer Überwachungsvorrichtung oder einer Anschlusskomponente zugeordnet sind, über beispielsweise die in Fig. 2. dargestellte Busverbindung 12. Die Sendeeinrichtung kann beispielsweise ausgebildet sein, amplituden- und/oder phasenmodulierte Sendesignale zu erzeugen und auszusenden.

## Patentansprüche

1. Überwachungssystem zum Überwachen eines Anschlusses von zumindest einer Anschlusskomponente an ein Energieversorgungsnetz, wobei die Anschlusskomponente an das Energieversorgungsnetz und über ein elektrisches Verbindungselement an ein Überwachungssystem anschließbar ist, und wobei das Überwachungssystem umfasst:
eine Überwachungsvorrichtung zur Überwachung des Anschlusses einer Anschlusskomponente an ein Energieversorgungsnetz, wobei die Anschlusskomponente an das Energieversorgungsnetz und über ein elektrisches Verbindungselement an das Überwachungssystem anschließbar ist, und wobei die Überwachungsvorrichtung umfasst:
eine Spannungsmesseinrichtung (2.1) zum Erfassen eines Spannungswertes einer Spannung zwischen einem ersten Anschluss (4.1.a) und einem zweiten Anschluss (5.1.a) des elektrischen Verbindungselementes, wobei der erste Anschluss (4.1.a) und der zweite Anschluss (5.1.a) mit dem Überwachungssystem verbindbar sind; und
eine Auswerteeinrichtung (6.1) zum Auswerten des Spannungswertes, wobei die Auswerteeinrichtung (6.1) ausgebildet ist, ein Hinweissignal zu erzeugen, das auf eine fehlerhaften Anschluss an das Energieversorgungsnetz hinweist, falls der Spannungswert sich von einem vorbestimmten Spannungswert unterscheidet **gekennzeichnet durch**:
- eine Stromerzeugungseinrichtung (8), insbesondere eine Stromquelle, zum Einspeisen eines Stromes einer vorbestimmten Amplitude in den ersten Anschluss (4.1.a) des Verbindungselementes, um einen Spannungsabfall zwischen dem ersten Anschluss (4.1.a) und dem zweiten Anschluss (5.1.a) zu erzeugen; und dass
ein weiteres Verbindungselement vorgesehen ist, mit dem das Verbindungselement der Anschlusskomponente verbindbar ist; wobei das weitere Verbindungselement eine niederohmige Verbindung (13.1) oder ein Widerstandselement zwischen einem ersten Anschluss (4.1.b) des weiteren Verbindungselementes und einem zweiten Anschluss (5.1.b) des weiteren Verbindungselementes aufweist, wobei die Anschlüsse (4.1.b, 5.1.b) des weiteren Verbindungselementes mit den Anschlüssen (4.1.b, 5.1.b) des Verbindungselementes verbindbar sind.

2. Überwachungssystem mit einer Überwachungsvorrichtung gemäß Anspruch 1, wobei zwischen den ersten Anschluss (4.1.a) und den zweiten Anschluss (5.1.a) ein Widerstandselement (3.1) schaltbar ist.

3. Überwachungssystem mit einer Überwachungsvorrichtung gemäß einem der Ansprüche 1 bis 3, wobei der vorbestimmte Spannungswert zwischen 0 Volt 1 Volt liegt.

4. Überwachungssystem mit einer Überwachungsvorrichtung gemäß einem der Ansprüche 1 bis 4, die in dem Verbindungselement angeordnet ist.

5. Anschlusskomponente, insbesondere eine Fahrzeugbatterie oder eine Fahrzeugzündspule oder eine Fahrzeugsteuereinheit oder eine Niedervoltfahrzeugbatterieanlage oder ein Komponentengehäuse oder ein Komponentengehäusedeckel, mit dem Überwachungssystem mit der Überwachungsvorrichtung gemäß einem der Ansprüche 1 bis 3.

6. Überwachungssystem gemäß einem der Ansprüche 1 bis 5, das ferner eine zentrale Auswerteeinrichtung (10) aufweist, die mit der Auswerteeinrichtung (6.1) der Überwachungsvorrichtung gemäß einem der Ansprüche 1 bis 6 verbindbar ist, um das Hinweissignal zu empfangen und um bei Vorliegen eines Verbindungsfehlers ein Fehlersignal auszugeben, dass auf die Anschlusskomponente hinweist.

7. Fahrzeugenergiesystem, mit: dem Überwachungssystem gemäß einem der Ansprüche 1 bis 7.

## Claims

1. Monitoring system for monitoring a connection of at least one connection component to a power supply network, wherein the connection component can be connected to the power supply network and to a monitoring system via an electrical connecting element, and wherein the monitoring system comprises:
a monitoring device for monitoring the connection of a connection component to a power supply network, wherein the connection component can be connected to the power supply network and to the monitoring system via an electrical connecting element, and wherein the monitoring device comprises:
a voltage-measuring apparatus (2.1) for measuring a voltage value of a voltage between a first connection (4.1.a) and a second connection (5.1.a) of the electrical connecting element, wherein the first connection (4.1.a) and the second connection (5.1.a) can be connected to the monitoring system; and
an evaluation apparatus (6.1) for evaluating the voltage value, wherein the evaluation apparatus (6.1) is designed to generate an indication signal which indicates a faulty connection to the power supply network if the voltage value differs from the predetermined voltage value, **characterized by**
- a current-generating apparatus (8), in particular a current source, for feeding a current with a predetermined amplitude into the first connection (4.1.a) of the connecting element in order to generate a voltage drop between the first connection (4.1.a) and the second connection (5.1.a); and in that a further connecting element is provided to which the connecting element of the connection component can be connected;
the further connecting element has a low-impedance connection (13.1) or a resistor element between a first connection (4.1.b) of the further connecting element and a second connection (5.1.b) of the further connecting element, wherein the connections (4.1.b, 5.1.b) of the further connecting element can be connected to the connections (4.1.b, 5.1.b) of the connecting element.

2. Monitoring system having a monitoring device according to Claim 1, wherein a resistor element (3.1) can be connected between the first connection (4.1.a) and the second connection (5.1.a).

3. Monitoring system having a monitoring device according to one of Claims 1 to 3, wherein the predetermined voltage value is between 0 volts and 1 volt.

4. Monitoring system having a monitoring device according to one of Claims 1 to 4, which monitoring device is arranged in the connecting element.

5. Connection component, in particular a vehicle battery or a vehicle ignition coil or a vehicle control unit or a low-voltage vehicle battery system or a component housing or a component housing cover, with the monitoring system having the monitoring device according to one of Claims 1 to 3.

6. Monitoring system according to one of Claims 1 to 5, which also has a central evaluation apparatus (10) which can be connected to the evaluation apparatus (6.1) of the monitoring device according to one of Claims 1 to 6 in order to receive the indication signal and to output a fault signal when a connection fault occurs, which fault signal indicates the connection component.

7. Vehicle power system having:
the monitoring system according to one of Claims 1 to 7.

## Revendications

1. Système de surveillance destiné à surveiller le raccordement d'au moins un composant de raccordement à un réseau d'alimentation en énergie, le composant de raccordement pouvant être raccordé au réseau d'alimentation en énergie ainsi que par l'intermédiaire d'un élément de raccordement électrique à un système de surveillance, le système de surveillance comprenant :
un dispositif de surveillance qui surveille le raccordement d'un composant de raccordement à un réseau d'alimentation en énergie, le composant de raccordement pouvant être raccordé au réseau d'alimentation en énergie et par l'intermédiaire d'un élément de raccordement électrique au système de surveillance, le système de surveillance comprenant :
un dispositif (2.1) de mesure de la tension qui détecte la valeur de la tension entre une première borne (4.1.a) et une deuxième borne (5.1.a) de raccordement de l'élément de raccordement électrique, la première borne (4.1.a) et la deuxième borne (5.1.a) pouvant être reliées au système de surveillance et
un dispositif d'évaluation (6.1) qui évalue la valeur de la tension, le dispositif d'évaluation (6.1) étant configuré pour délivrer un signal d'indication qui indique un défaut de raccordement au réseau d'alimentation en énergie au cas où la valeur de la tension diffère d'une valeur prédéterminée de la tension,
**caractérisé en ce que**
un dispositif (8) de production de courant, en particulier une source de courant, qui injecte un courant d'une amplitude prédéterminée sur la première borne (4.1.a) de l'élément de raccordement pour produire une chute de tension entre la première borne (4.1.a) et la deuxième borne (5.1.a),
**en ce qu'**un autre élément de raccordement par lequel l'élément de raccordement peut être relié au composant de raccordement est prévu,
**en ce que** l'autre élément de raccordement présente une liaison (13.1) à basse résistance ou un élément de résistance entre une première borne (4.1.b) de l'autre élément de raccordement et une deuxième borne (5.1.b) de l'autre élément de raccordement, les bornes (4.1.b, 5.1.b) de l'autre élément de raccordement pouvant être reliées aux bornes (4.1.b, 5.1.b) de l'élément de raccordement.

2. Système de surveillance doté d'un dispositif de surveillance selon la revendication 1, un élément de résistance (3.1) pouvant être raccordé entre la première borne (4.1.a) et la deuxième, borne (5.1.a).

3. Système de surveillance doté d'un dispositif de surveillance selon l'une des revendications 1 et 2, dans lequel la valeur prédéterminée de la tension est située entre 0 volt et 1 volt.

4. Système de surveillance doté d'un dispositif de surveillance selon l'une des revendications 1 à 3, disposé dans l'élément de raccordement.

5. Composant de raccordement, en particulier batterie de véhicule, bobine d'allumage de véhicule, unité de commande de véhicule, installation de batterie de véhicule à basse tension, boîtier de composant ou couvercle de boîtier de composant dotés du système de surveillance présentant le dispositif de surveillance selon l'une des revendications 1 à 3.

6. Système de surveillance selon l'une des revendications 1 à 5, qui présente en outre un dispositif central d'évaluation (10) qui peut être relié au dispositif d'évaluation (6.1) du dispositif de surveillance selon l'une des revendications 1 à 6 pour recevoir le signal d'indication et, en cas de présence d'un défaut de raccordement, délivrer un signal de défaut qui indique le composant de raccordement.

7. Système d'énergie pour véhicule doté du système de surveillance selon l'une des revendications 1 à 7.
